# EUROPEAN PATENT APPLICATION

(11) **EP 4 838 497 A1**
(43) Date of publication of application: **11.11.2026**
(21) Application number: 25175147.5
(22) Date of filing: 08.05.2025
(51) Int. Cl.: G08G 1/01, B60W 40/068, G01C 21/00, G08G 1/0962, G08G 1/0967, G08G 1/0968, G01C 21/34, G08G 1/00

(54) **METHOD FOR TRAFFIC PLANNING USING FRICTION ESTIMATION**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

Provided herein is a computer system (200) with processing circuitry (210) for planning of transport missions for a plurality of vehicles. The computer system is configured to gather estimated ground friction values (*µ_{i,t}*) for vehicles (140) driving in a geographical area, and to generate an estimated ground friction map for the area that is divided into tiles and/or zones, and to calculate aggregate estimated ground friction values (*µ̅ₖ*) for the tiles/zones based on the estimates from the vehicles, and to use the estimated ground friction map as part of planning of one or more transport missions (240) for one or more vehicles that are to be performed in the geographical area. A corresponding vehicle fleet, method, computer program, computer program product and computer-readable storage medium are also provided.

## Description

### TECHNICAL FIELD

The disclosure relates generally to traffic planning for vehicles, such as for e.g. heavy vehicles and/or pieces of heavy machinery. In particular aspects, the disclosure relates to traffic planning using friction estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To estimate friction between a vehicle's wheels and ground may be challenging, both for vehicles that are driven manually as well as for driven fully or semi-autonomously. As the only contact between the vehicle and ground is usually through the tires, and as the friction between the tires and ground dictates the controllability of the vehicle (or vehicle combination), it may be imperative to obtain as accurate friction estimates as possible.

For example, for manually driven vehicles, accurate friction estimates may provide a foundation for how to distribute e.g. actuation forces between different actuators, such as when controlling propulsion and/or braking of the vehicle. For autonomous driven vehicles, accurate friction estimates may be desirable both to understand if the vehicle is designed to drive in current conditions (referred to as e.g. an operational design domain), and to determine how the vehicle is to be actuated in order to cope with current friction conditions, e.g. whether it shall slow down, use less auxiliary braking, and similar.

The present disclosure seeks to provide an improved solution for friction estimation.

### SUMMARY

According to a first aspect, there is provided a computer system that includes processing circuitry. The processing circuitry is configured to gather, for each vehicle of a first set of one or more vehicles driving in a geographical area, data indicative of at least vehicle position and estimated ground friction at the vehicle position. The processing circuitry is further configured to generate or update an estimated ground friction map of the geographical area, wherein the map defines a division of the geographical area into a plurality of geographical zones or grid tiles. The processing circuitry is further configured to find an aggregate estimated ground friction for a zone or tile based on aggregation of the estimated ground friction for one or more vehicle positions belonging to the zone or tile. The processing circuitry is further configured to use the estimated ground friction map as part of planning of one or more transport missions in the geographical area for each vehicle of a second set of one or more vehicles. This includes to use the estimated ground friction map to determine at least one of i) a desired speed limit or speed profile for the vehicle within a particular zone or tile, and ii) whether the aggregate estimated ground friction value in the particular zone or tile is sufficiently large to allow the vehicle to drive through the particular zone or tile. The first aspect seeks to solve the problem of how to estimate ground friction in a geographical area, such that planning of transport missions in this area can be made more efficient and safer. A technical benefit may include that by gathering data from multiple vehicles having already driven in the area, planning of a mission for a particular vehicle that later visits the area can be made more proactive, and not only rely on a current friction estimate performed by the vehicle itself. Phrased differently, the envisaged solution allows to share friction estimate information among multiple vehicles, and the mission planning can be facilitated by already having access to estimates of the ground friction conditions in the geographical area.

Optionally in some examples, including in at least one preferred example, the desired speed limit of the vehicle in the particular zone or tile may be reduced if the aggregate estimated ground friction (value) for the particular zone or tile is below a first friction threshold. A technical benefit may include that the planned speed of the vehicle can thus be adapted to prevailing ground friction conditions, to avoid that the vehicle travels with too high speed in e.g. icy or otherwise slippery conditions, and similar.

Optionally, in some examples, including in at least one preferred example, the vehicle may not be allowed to drive through the particular zone or tile if the aggregate estimated ground friction (value) for the particular zone or tile is below a second friction threshold. A technical benefit may include that the risk of a vehicle being involved in e.g. an accident due to having too little grip, or similar, may thus be reduced or avoided, by preventing access to a particular zone or tile wherein the estimated (aggregate) ground friction is deemed too low for safe travel of the vehicle. As an example, in such a situation, the planned route may circumvent the particular zone or tile, if there are one or more other nearby zones or tiles wherein the ground friction appears to be higher. If no such nearby zones or tiles are available, planning of the mission may include halting the vehicle and/or approaching a target of the mission from another direction, at least until the estimated ground friction conditions in the particular zone or tile improves, and similar.

Optionally, in some examples, including in at least one preferred example, the first friction threshold may be higher than the second friction threshold. The desired speed limit may be determined by interpolating between a first speed limit associated with the first friction threshold and a second speed limit associated with the second friction threshold, wherein the first speed limit is higher than the second speed limit. In some examples, the second speed limit may for example be zero. In other examples, the second speed limit may be higher than zero. A technical benefit of such interpolating may include that a more gradual adaptation to different ground friction conditions may be achieved, and e.g. avoid abrupt speed changes when passing between two zones or tiles having different estimated ground friction conditions.

Optionally, in some examples, including in at least one preferred example, the aggregation may include to give more weight to more recently estimated ground friction (values) than to others. A technical benefit may include that older estimates that may no longer be relevant are thus given less attention, and newer estimates that are more likely to still be relevant are given more attention.

Optionally, in some examples, including in at least one preferred example, the aggregation may include to form a time-rolling average of a predefined number of most recent estimated ground friction (values). A technical benefit may include that such an average will automatically discard older, presumably less relevant, estimates and favor more recent, and presumable more relevant, estimates, thereby making the ground friction map more in accordance with actual prevailing ground friction conditions in the geographical area.

Optionally, in some examples, including in at least one preferred example, the aggregation may include to discard estimated ground friction values whose age is above a predefined time threshold, with the same technical benefits as already described above.

Optionally, in some examples, including in at least one preferred example, the gathered data may be further indicative also of a confidence level of each estimated ground friction (value) and/or vehicle position. The aggregation may include to give more weight to more confident values (i.e. ground friction estimates and/or positions) than to less confident ones. A technical benefit may include that the ground friction map can thus be made more accurate, as estimates and/or positions with higher uncertainty are not allowed to propagate (at all, or as much) through repeated updates of the map.

Optionally, in some examples, including in at least one preferred example, the aggregation may include to discard estimated ground friction values whose confidence level is below a predefined confidence threshold, with the same technical benefits as already described above, e.g. to avoid using more uncertain values for updating the map.

Optionally, in some examples, including in at least one preferred example, at least some of the geographical zones may correspond to different sections of a route to be driven by the vehicle as part of the one or more transport missions. A technical benefit may include that the zones may thus be more representative for the actual task of the vehicle, and e.g. each correspond to a certain length of the route, and similar.

Optionally, in some examples, including in at least one preferred example, at least one of the geographical zones may correspond to a loading and/or unloading zone. A technical benefit may include that such a zone may be of particular interest, as it is likely to be visited by many vehicles and where knowledge about prevailing friction conditions is particularly important, in order to e.g. avoid accidents between vehicles.

Optionally, in some examples, including in at least one preferred example, for a geographical zone or tile for which no estimated ground friction is provided and/or for which some or all of the estimated ground friction are deemed too old, the aggregate estimated ground friction may be determined based on aggregate estimated ground friction for one or more neighboring zones or tiles. A technical benefit may include that it may thus be possible for a vehicle to still enter the zone as part of a planned mission even if the zone or tile has not (recently) been visited by any vehicle, based on a presumably reasonable assumption that a friction in one particular zone or tile is not particularly different from a friction in one or more neighboring zones or tiles.

Optionally, in some examples, including in at least one preferred example, the geographical zones or tiles may be dynamically redefined over time, such that zones and/or tiles for which the aggregate estimated ground friction (values) are the same, or at least belong to a same ground friction interval, are considered to form a same zone or tile for the planning of the one or more transport missions. A technical benefit may include that the total number of zones or tiles may thus be reduced, and that e.g. edge-cases (such as parts of the geographical area with particularly low ground friction) may be grouped together, and such that special care may be taken for vehicles that enters (or are planned to enter) such zones or tiles.

Optionally, in some examples, including in at least one preferred example, the desired speed limit or speed profile for the vehicle within the particular zone or tile, and/or the decision whether to allow the vehicle to drive through the particular zone or tile, may depend on at least one of a weight of the vehicle and a type of the vehicle. A technical benefit may include that each vehicle may be evaluated individually, and that e.g. more restrictive decisions may be taken for vehicles whose weight and/or type are more sensitive to ground friction conditions than others, and similar.

Optionally, in some examples, including in at least one preferred example, the desired speed profile for the vehicle may include set speed, distance threshold(s) to nearby vehicles and an emergency brake profile.

Optionally, in some examples, including in at least one preferred example, the processing circuitry may be further configured to distribute, via one or more suitable antennas, at least part of the ground friction map and/or the aggregate estimated ground friction for one or more zones or tiles to one or more of the vehicles in the second set of one or more vehicles. A technical benefit may include that these one or more vehicles may then use such information as part of their own motion planning, such as part of one or more automated driver assistance systems (ADAS), vehicle motion management (VMM) systems, and similar. Thus, such vehicles may not have to rely solely on their own estimates of ground friction, but may instead be provided with estimates for sections of e.g. a road that the vehicle is yet to visit, such that the vehicle may proactively plan ahead how to behave in such sections. As another technical benefit, the second set of one or more vehicles may include vehicles that are not capable of performing ground friction estimation on their own, and for such vehicles it may be beneficial to instead receive such estimates from the computer system and processing circuitry of the first aspect.

According to a second aspect, there is provided a fleet of transport vehicles. The fleet includes a plurality of vehicles configured to transport goods and/or persons as part of one or more transport missions. The fleet further includes the computer system of the first aspect (or any example thereof disclosed or derivable from herein). At least one of the vehicles is configured to estimate its vehicle position and estimate ground friction at this position, and to provide (e.g. send, using for example an antenna) data indicative of its estimated ground friction and vehicle position to the computer system. The computer system is configured to gather the data from the at least one vehicle and to plan the one or more transport missions. Using the wording of the first aspect, the fleet includes at least one vehicle part of the first set of one or more vehicles and at least one vehicle part of the second set of one or more vehicles. The second aspect may seek to solve the problem of how to provide a vehicle fleet and plan transport missions for the involved vehicles more efficiently and safely. A technical benefit may include, as already described herein, to use the computer system and the aggregate ground friction estimates to create the ground friction map of the geographical area, and similar.

According to a third aspect, there is provided a (computer-implemented) method for planning of one or more transport missions for a vehicle fleet. The method includes, by processing circuitry of a computer system (such as that of the computer system of the first aspect), gathering, for each vehicle of a first set of one or more vehicles driving in a geographical area, data indicative of at least vehicle position and estimated ground friction at the vehicle position. The method further includes generating or updating, by the processing circuitry, an estimated ground friction map of the geographical area, wherein the map defines a division of the geographical area into a plurality of geographical zones or grid tiles, and wherein an aggregate estimated ground friction for a zone or tile is found based on aggregation of the estimated ground friction for one or more vehicle positions belonging to the zone or tile. The method further includes using, by the processing circuitry, the estimated ground friction map as part of planning of one or more transport missions in the geographical area for each vehicle of a second set of one or more vehicles, that includes using the estimated ground friction map to determine at least one of i) a desired speed limit or speed profile for the vehicle within a particular zone or tile, and ii) whether the aggregate estimated ground friction in the particular zone or tile is sufficiently large to allow the vehicle to drive through the particular zone or tile. The third aspect may seek to solve the problem of how to provide a method that may be performed by processing circuitry of a computer system, such as that of the first aspect, and with the same technical benefits as already described in relation thereto.

According to a fourth aspect, there is provided a computer program that includes program code (or instructions) for performing, when executed by processing circuitry of a computer system, the method of the third aspect.

According to a fifth aspect, there is provided a computer program product that includes program code (or instructions) for performing, when executed by processing circuitry of a computer system, the method of the third aspect.

According to a sixth aspect, there is provided a computer-readable storage medium that includes instructions (or program code) that, when executed by processing circuitry of a computer system, cause the processing circuitry to perform the method of the third aspect. In some examples, the computer-readable storage medium may be non-transitory. The storage medium of the sixth aspect may for example be included as part of the computer program product of the fifth aspect, and serve as a carrier of the program code/computer program included therein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically illustrates an example geographical area including a plurality of vehicles used for transport missions, according to one or more examples.
**FIG. 2A** schematically illustrates one or more examples of a computer system, processing circuitry and vehicle fleet, according to one or more examples.
**FIG. 2B** schematically illustrates an example transport mission planned for a vehicle in a geographical area, according to one or more examples.
**FIG. 3** schematically illustrates a flowchart of one or more examples of a method for transport mission planning, according to one or more examples.
**FIG. 4A** schematically illustrates an example estimated ground friction map divided into grid tiles, according to one or more examples.
**FIG. 4B** schematically illustrates an example estimated ground friction map divided geographical zones, according to one or more examples.
**FIG. 4C** schematically illustrates an example of transport mission planning using an estimated ground friction map, according to one or more examples.
**FIG. 4D** schematically illustrates an example estimated of dynamically updating an estimated ground friction map, according to one or more examples.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

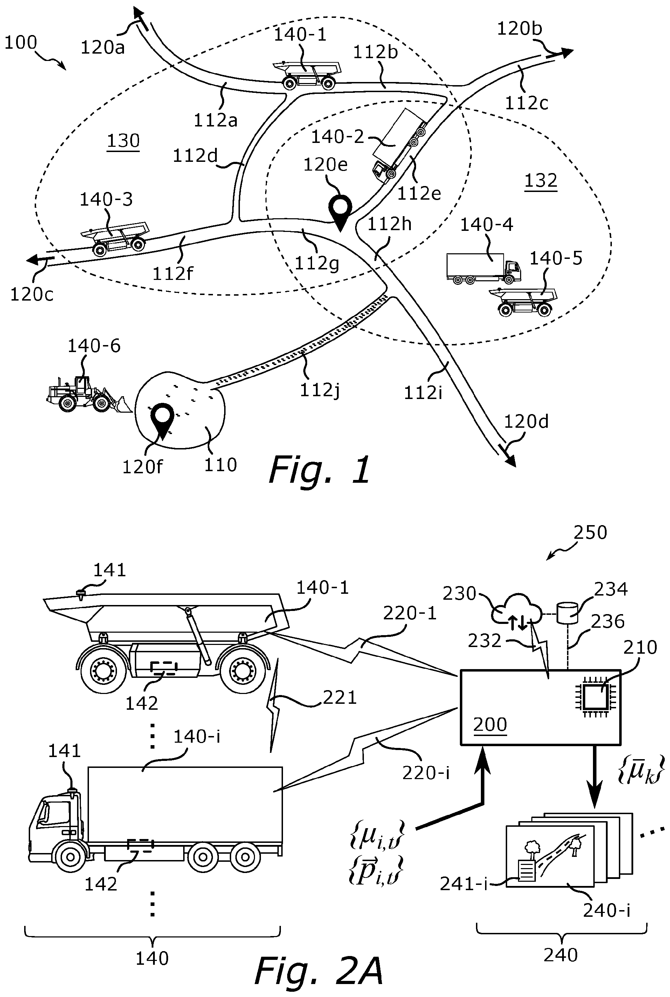

**FIG. 1** schematically illustrates an example geographical area 100 as envisaged herein, in which a vehicle fleet operates to perform transport missions of e.g. goods and/or people. In this particular example, the area 100 includes a network of road sections 112a, 112b, 112c, 112d, 112e, 112f, 112g, 112h, 112i, 112j, interconnecting a plurality of locations 120a, 120b, 120c, 120d, 120e and 120f. In this particular example, locations 120a-d are destinations outside of the part of the area 100 as shown in Figure 1, but may of course in other examples at least to some extent form part of the area 100. Location 120e is an intersection where several of the road sections 112a-j meet, while location 120f is at a loading site 110. In this particular example, road section 112j is an offroad or gravel surface section, while the other sections are e.g. asphalt, gravel, or similar harder surfaces. It does, of course, not matter for the present disclosure exactly how the area 100 is configured, where it is located in the world, whether it contains fewer or more road sections, and/or other road sections, than those shown in FIG. 1, and similar. Generally, an area such as 100 is a geographical area of the world wherein it is expected to operate at least one transport vehicle in order to perform one or more transport missions.

The vehicle fleet include may include a plurality of vehicles, that may be divided into at least a first set 130 of vehicles and a second set 132 of vehicles, wherein the two sets 130 and 132 may be a same set, may at least partially overlap, or may be disjoint sets. In this particular example, the first set includes a plurality of transport vehicles 140-1, 140-2, 140-3, and the second set includes the vehicle 140-2 as well as a plurality of transport vehicles 140-2, 140-4 and 140-5. The two sets overlap, as the vehicle 140-2 forms part of both sets 130, 132. Exactly how each set is configured does of course not matter, as will be made obvious from the further description below, as long as there is at least one vehicle in the combined (joint) set formed by joining the sets 130 and 132. As envisaged herein, in addition and in some examples, at least the first set 130 may also include one or more other vehicles or pieces of heavy machinery, such as for example a wheel loader 140-6 operated at the loading/unloading site 110.

As envisaged herein, a vehicle or "transport vehicle" may be configured to drive autonomously, semi-autonomously or manually (as conventionally performed using a human operator/driver). Other examples include e.g. vehicles that are manually operated but from a remote location, e.g. vehicles who are controlled/steered via a radio link or similar. In the present example, vehicles 140-1, 140-3 and 140-5 are autonomous material hauling vehicles/dump trucks, while vehicles 140-2 and 140-4 are conventional transport vehicles here in form of box cargo trucks. Other types of vehicles, or even pieces of heavy machinery such as, dump trucks, articulated haulers, excavators, tractors, tractor plus one or more trailers, semi-trailers, buses, forestry machines, wood logging trucks, forwarders, and similar, are also envisaged as possible candidates for "transport vehicles" as described herein.

The present disclosure is concerned with the problem of how to perform planning of one or more transport missions that are to be performed at least by one or more vehicles of the second set 132. For example, such a transport mission may include for a vehicle to drive between two or more of the locations 120a-f shown in FIG. 1, or between any at least two possible locations between which there is a need to transport material, people, animals, and/or any other entity in need of transport. Transport missions as envisaged herein may for example be from a point A to a point B, from a point A to a point B and back to point A, between consecutive points A, B and C, or any possible combination of driving between at least two points/locations. Transport missions may be one-time occasions, or cyclic wherein a vehicle is repeatedly driven back and forth between at least two locations. Exactly how each transport mission is defined is not important, as long as there is a need for the planning of at least one such mission within the geographical area 100.

**FIG. 2A** schematically illustrates various examples of a computer system 200 as envisaged herein, that is provided for the purpose of facilitating and improving such transport mission planning. FIG. 2A also serves to illustrate an example vehicle fleet 250 as envisaged herein, including the plurality of transport vehicles 140 and the computer system 200.

The computer system 200 includes processing circuitry 210 that is configured to, together with e.g. various other parts of the computer system 200 and e.g. one or more antennas or other means for establishing wireless connection (not shown) communicate with the plurality 140 of transport vehicles, via e.g. a wireless link 220-1 between vehicle 140-1, a wireless link 220-i between vehicle 140-i, and similar. Such communication may for example be established using contemporary or future telecommunications technology, satellite communications technology, or any other form of optical, radio, or distance communication enabling technology available. As envisaged herein, in some examples, the vehicles may also communicate with each other using wireless communication 221, to e.g. form a mesh of vehicles. Such inter-vehicle communication may for example help to extend the overall communication range, such that e.g. one or more vehicles closer to the computer system 200 may help to relay information between the computer system 200 and one or more vehicles further away from the computer system 200, and similar. For the present disclosure, it is not important exactly how the computer system 200 is configured to communicate with the vehicles 140, as long as the computer system 200 may somehow receive data from the vehicles 140. In some examples, the communication may be one-way only (from the vehicles 140 to the computer system 200/processing circuitry 210), while in other examples the communication may be two-way (i.e. to/from the vehicles from/to the computer system 200/processing circuitry 210). As already described herein, communication between the computer system 200/processing circuitry 210 and one or more vehicles may be direct or indirect (via one or more other vehicles, or e.g. via one or more repeaters or other intermediate communication relays such as network nodes, base stations, satellites, and similar).

As envisaged herein, each of the vehicles 140, or at least each of the vehicles forming part of the first set 130, are provided with geographical positioning devices 141 such that each vehicle knows (i.e. can estimate) its geographical position, e.g. in global coordinates and/or in relation to some fixed point agreed upon between the vehicles 140 the computer system 200. The vehicles 140 may for example use GPS, Glonass, Galileo, Beidou or any similar positioning system. Instead, or in addition, other examples envisaged herein include the vehicles using e.g. one or more inertial sensors (such as IMUs) or similar to keep track of their positions, e.g. by dead reckoning or similar. For the present disclosure, it is not important exactly how each vehicle is configured to determine its geographical location (i.e., its position within the geographical area 100).

In some examples, communication between the computer system 200 and vehicles 140 may instead be indirect, and occur via e.g. a cloud-based service 230 to which both the computer system 200 and vehicles 140 have access, or similar (the computer system 200 and processing circuitry 210 may for example be configured to access data 234 stored in such a cloud-based service, or external server, 230 via e.g. a wireless link 232 and/or a wired link 236). The vehicles 140 may in such examples upload their positions to the service 230, and the computer system 200 and processing circuitry 210 may download such data from the service 230. In such examples, communication does not have to be in real time, e.g. there may be a delay between a vehicle uploading its position to the service 230 and the computer system 200/processing circuitry 210 accessing such data from the service 230. In some examples, the vehicles 140 and/or the service 230 may time-stamp the data, e.g. provide a time-stamp at which the position was estimated and/or received to each data item, and similar.

In addition to providing their geographical positions, it is herein envisaged that the vehicles 140, or at least the one or more vehicles forming part of the first set 130, are further configured to estimate a ground friction at their geographical location, using any suitable technology available for such a purpose. Exactly how each vehicle is configured to determine/estimating the ground friction where it is currently at is not important, and will not be described in more detail herein. Generally, each vehicle (at least in the first set 130) may be provided with at least one system/device/unit 142 capable of performing such ground friction estimation.

As mentioned earlier herein, in some examples, vehicles not performing transport missions per se, such as e.g. the wheel loader 140-6 may also be included as part of the first set 130, and be configured to communicate with the computer system 200 and processing circuitry 210 similarly to the vehicles 140, to upload its position and estimated ground friction as well.

As envisaged herein, "ground friction" refers to friction between at least one tire of a vehicle and the ground surface, i.e. the force resisting relative motion between the surface of the tire in contact with the ground surface and the ground surface itself. In particular, ground friction may refer to static friction, dynamic (sliding friction), peak friction (e.g. at a longitudinal slip value that maximizes longitudinal tire force), and similar. Which type of friction that is most relevant may of course vary depending on how the mission planning is to be performed, and it is envisaged that vehicles as described herein may be configured to estimate at least one such type of friction. For example, the solution as envisaged herein may be used to estimate static friction, e.g. such that the data obtained from the one or more vehicles when driving around are estimates of static friction. Other solutions, such as estimating one type of friction and using for example one or more look-up tables to map to some other type of friction, are of course also possible. In some examples, a vehicle as envisaged herein may be configured to estimate several different types of friction, and may of course also be configured to communicate estimates of all such different ground friction types to the computer system 200 and processing circuitry 210.

The computer system 200 and processing circuitry 210 are further configured to use the communicated position and friction estimates from at least the vehicles of the first set 130 as part of planning of one or more transport missions 240 for at least the vehicles of the second set 132, such as for example at least a planned transport mission 240-i for vehicle 140-i. The computer system 200 is further configured to, once planning of a transport mission 240-i is complete, communicate the planned mission to the respective vehicle, such that the vehicle may either implement the mission autonomously, or such that a driver of the vehicle is made aware of what the next mission is. As envisaged herein, a mission 240-i may be defined by mission data 241-i, including e.g. one or more of a route to be exactly or approximately followed, a speed profile to be maintained during the mission (as indicated e.g. by a desired speed as a function of where along the planned route the vehicle is currently at), and/or by one or more other relevant parameters. As envisaged herein, a planned mission and the accompanying mission data 241-i defines at least the route that is to be driven. As envisaged herein, a route may e.g. be defined by a set of geographical coordinates that are to be visited in a particular order. Such coordinates may e.g. be waypoints such as intersections or other geographical locations, or e.g. be just coordinates defining a path on a map, along ground, or similar. Exactly how the route to be followed is defined is not important, as long as the corresponding mission data 241-i includes data sufficient for e.g. an autonomous vehicle or a vehicle driver to figure out how the vehicle should be controlled/steered to complete the mission. A mission as envisaged herein may define a complete route at once, or e.g. be divided into a plurality of submissions, each defining a section of the complete route, and similar.

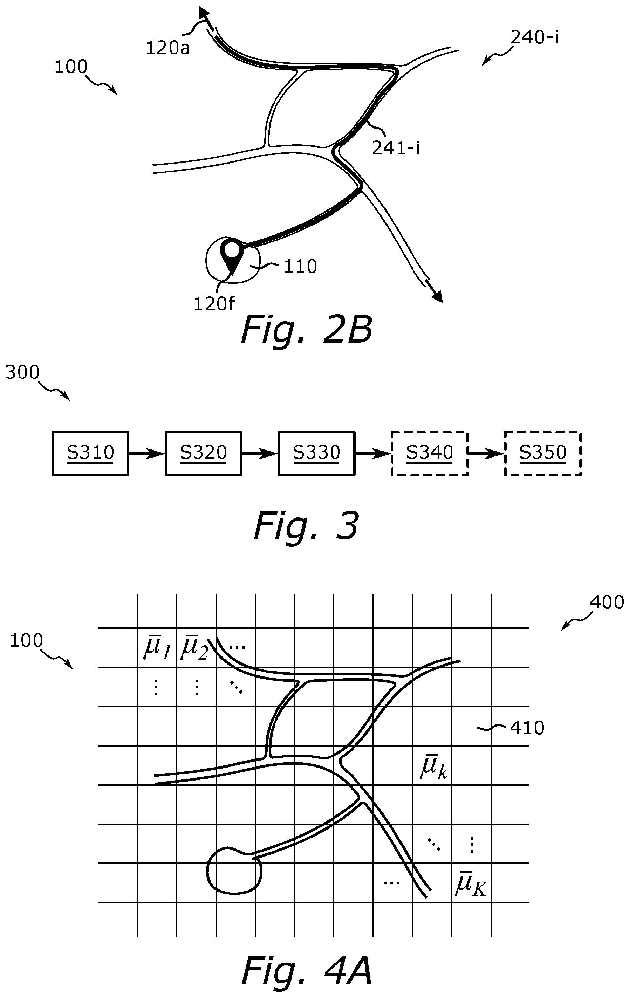

**FIG. 2B** schematically illustrates one example of a transport mission 240-i as envisaged herein, including mission data 241-i indicative of a route to be followed. In this particular example, using the geographical area of FIG. 1, the mission 240-i includes driving from the location 120f (i.e. loading/unloading site) and to/towards location 120a. Other examples are of course also possible, all depending on the situation and current use/need for the vehicle fleet 250. In more detail, as can be seen by comparing FIG. 1 and FIG. 2B, the route indicated by the mission data 241-i follows along the road sections 112j, 112h, 112e, 112b and 112a, together connecting the locations 120f and 120a together.

How the computer system 200 as envisaged herein is to perform transport mission planning will now be described in more detail with reference also to FIG. 3.

**FIG.** 3 schematically illustrates a flowchart of one or more examples of a method 300 for transport mission planning. The method 300 is computer-implemented, and the various operations thereof are performed by processing circuitry of a computer system, such as by the processing circuitry 210 of the computer system 200.

The processing circuitry 210 is configured to gather, as part of an operation S310 of the method 300 and for one or more vehicles of the first set 130 driven in the geographical area 100, data indicative of at least vehicle position and estimated ground friction at the vehicle position. For example, the processing circuitry 210 may gather a set of data {*p̅_{i,t}*} and {*µ_{i,t}*}. Here, element *p̅_{i,t}* indicates an estimated position (e.g. coordinates *x_{i,t}, y_{i,t}*; in e.g. cartesian coordinates, latitude/longitude, polar coordinates, spherical coordinates, or in any other suitable coordinate system) of the *i*-th vehicle at time instance *t*. Element *µ_{i,t}* correspondingly indicates the estimated ground friction for the *i*-th vehicle at time instance *t*, obtained for/at the corresponding position *p̅_{i,t}*. Such data is thus collected from one or more vehicles that have previously driven (or is currently driving) in the geographical area 100.

The processing circuitry 210 is further configured to generate or update, as part of an operation S320 of the method 300, an estimated ground friction map of the geographical area. As envisaged herein, the map (denoted e.g. *M*) defines a division of the area 100 into a plurality of geographical zones or grid tiles, as will be further exemplified in more detail later herein. For each zone or tile (or at least for some of the zones or tiles), the processing circuitry 210 further estimates/finds an aggregate estimated ground friction *µ̅ₖ* value, where *k* indicates that the value is for the *k*-th tile. How to index these values to understand to which zone or tile they correspond may of course be done differently than exemplified herein, as long as it may somehow be derived which aggregate estimated ground friction value that corresponds to which zone or tile of the map. As envisaged herein, the aggregate estimated ground friction *µ̅ₖ* is found based on an aggregation of the estimated ground friction values for one or more vehicle positions belong to the zone or tile. As used herein, "aggregate" means that a single value is formed based on multiple values obtained from the one or more vehicles. As already described herein, each vehicle may in some examples to estimate more than one type of ground friction, such as static, dynamic/sliding, peak, and similar, in which case the processing circuitry 210 may of course be further configured to e.g. generate or update the ground friction map *M* such that it includes multiple aggregate estimated ground friction values for each zone or tile, e.g. one for each friction type, or e.g. a single aggregate estimated ground friction value formed based on estimates for different types of ground friction, and similar. Generally, the aggregate estimated ground friction *µ̅ₖ* for a zone or tile may in some examples be a scalar value, and in other examples a vector with elements for each type of relevant friction type.

The processing circuitry 210 is further configured to use, as part of an operation S330 of the method 300, the estimated ground friction map *M* as part of planning of the one or more transport missions 240 in the geographical area 100, for each vehicle of the second set 132 of one or more vehicles. This includes to use the estimated ground friction map *M* to determine at least one of i) a desired speed limit *v_{i,k,lim}* and/or speed profile *u_{i,k}*(*l*) for the vehicle within the particular zone or tile (where *l* is e.g. a distance travelled along the section of the route in zone or tile *k* defined by the mission planned for the *i*-th vehicle), and ii) whether the aggregate estimated ground friction in the particular zone or tile is sufficiently large to allow the vehicle to drive through the particular zone or tile. For example, a decision *D_{i,k}* may be determined for the *i*-th vehicle and *k*-th zone or tile, and a value of such a parameter may indicate whether the vehicle is allowed to drive through the zone or tile in question or not. For example, *D_{i,k}* may equal "1", "one" or "yes" if driving through tile or zone *k* is allowed, and otherwise equal e.g. "0", "zero" or "no", or similar. In other examples, *D_{i,k}* may instead be e.g. a probability between for example 0 and 1 (or 0 and 100%), indicative of e.g. an expected risk-level (or safety-level) of the *i*-th vehicle driving through zone or tile *k*.

In some examples, the desired speed limit *v_{i,k,lim}* of the vehicle in the particular zone or tiles may be reduced if the aggregate estimated ground friction *µ̅ₖ* is below a first friction threshold *µ*_{*k,thr*1}.

In some examples, the vehicle may not be allowed to drive through the particular zone or tile if the aggregate estimated ground friction *µ̅ₖ* is below a second friction threshold *µ*_{*k,thr*2}*.* For example, *D_{i,k}* = 0 if *µ̅ₖ < µ*_{*k,thr*1}, and otherwise *D_{i,k}* = 1, and similar.

In some examples, the first friction threshold *µ*_{*k,thr*1} may be larger/higher than the second friction threshold, i.e. such that *µ*_{*k,thr*1} *> µ*_{*k,thr*2}*.* The speed limit for the *k*-th tile or zone may for example be determined by associating a first speed limit *v*_{*i,k,lim*1} with the first friction threshold, and another, second speed limit *v*_{*i,k,lim*2} with the second friction threshold. The speed limit *v_{i,k,lim}* may for example be found by interpolating between the first and second speed limits, for example as ${v}_{i , k , lim} = {v}_{i , k , lim 2} + \frac{{\overline{μ}}_{k} - {μ}_{k , thr 2}}{{μ}_{k , thr 1} - {μ}_{k , thr 2}} \times \left({v}_{i , k , lim 1}-{v}_{i , k , lim 2}\right) ,$ (1) or similar, and e.g. *v_{i,k,lim}* = 0 or some predefined, low speed limit, in case *µ̅ₖ* < *µ*_{*k,thr*2}*.* As envisaged herein, there may of course be defined multiple friction limits and associated speed limits, and interpolation may be used to define the speed limit for an aggregate estimated ground friction lying between two such friction thresholds based on the associated speed limits.

In some examples, the aggregation of estimated ground friction obtained from the vehicles used to form the aggregate estimated ground friction *µ̅ₖ* for a particular *k*-th zone or tile may be formed by e.g. averaging over all ground friction estimates obtained for the particular zone or tile. For example, one may define a set *Fₖ* of tuples (*i, t*) defining ground friction estimates *µ_{i,t}* that all originates from the *k*-th zone or tile, and define the aggregate ground friction as ${\overline{μ}}_{k} = \frac{1}{{M}_{{F}_{k}}} {\sum }_{\left(i, t\right) ∈ {F}_{k}} {μ}_{i , t} ,$ (2) or similar, where *M_{Fₖ}* is the number of tuples in the set *Fₖ*.

In other examples, more weight may be given to more recently estimated ground friction values than others, e.g. as a weighted mean/average such that ${\overline{μ}}_{k} = \frac{{\sum }_{\left(i, t\right) ∈ {F}_{k}} w \left(t\right) {μ}_{i , t}}{{\sum }_{\left(i, t\right) ∈ {F}_{k}} w \left(t\right)} ,$ (3) where *w*(*t*₁) > *w*(*t*₂) if *t*₁ > *t*₂, and similar. This may reduce the risk of the aggregate *µ̅ₖ* depending on estimates that may no longer be relevant, e.g. due to passing of substantial time since they were obtained. Expression (2), i.e. an ordinary mean/average can be obtained by instead selecting equal weighting-terms *w*(*t*), e.g. such that *w*(*t*) = 1.

As another example, the envisaged aggregation may include to form a time-rolling average, e.g. such that *Fₖ* is selected to include the *Mₚᵣₑᵥ* most recently obtained estimates from the one or more vehicles in the first set 130 of one or more vehicles. This may be beneficial in that only the most recent estimates are then used, and in that older estimates are automatically discarded as more recent ones arrive. Such a time-rolling average may for example be ordinary in accordance with expression (2), or weighted in accordance with expression (3).

As another example, instead of using a predefined number of most recently obtained estimates, the set *Fₖ* may be defined to exclude all estimates whose age is above a predefined time threshold *Tₜₕᵣ,* i.e. such that *Fₖ* includes only estimates *µ_{i,t}* whose corresponding positions lie in the *k*-th zone or tile, and whose ages are e.g. such that *t_{cur}*-*t* ≤ *Tₜₕᵣ,* where *t_{cur}* is a current time instance and *t* the time instance at which the estimate was obtained.

In other examples, it is envisaged that the vehicles providing the estimated ground friction values may also be capable of providing indications of uncertainty/confidence in the estimates, such as e.g. a standard deviation/error σ*_{i,t}* or variance ${σ}_{i , t}^{2}$. If such information is available, the aggregation may be performed in a way that gives more weight to more confident values than to less confident values. For example, weighting-terms *w*(*µ_{i,t}*) could be defined as $w \left(\left(i, t\right)\right) = \frac{1}{{σ}_{i , t}^{2}} ,$ (4) where ${σ}_{i , t}^{2}$ is the corresponding variance of the estimate *µ_{i,t}*. A standard error for the aggregate estimated ground friction could be defined as ${\overline{σ}}_{k} = \sqrt{\frac{1}{{\sum }_{\left(i, t\right) ∈ {F}_{k}} {σ}_{i , t}^{- 2}}} = \sqrt{\frac{1}{{\sum }_{\left(i, t\right) ∈ {F}_{k}} w \left(\left(i, t\right)\right)}} ,$ (5) where *w*((*i, t*)) is as defined in expression (4) above. Combining expressions (3), (4) and (5) may provide that ${\overline{μ}}_{k} = {\overline{σ}}_{k}^{2} {\sum }_{\left(i, t\right) ∈ {F}_{k}} \frac{{μ}_{i , t}}{{σ}_{i , t}^{2}} .$

Other examples of using also uncertainties/confidences of the obtained estimates may include to e.g. define *Fₖ* such that it excludes estimates whose confidence levels are below a predefined confidence threshold, e.g. whose indicated standard errors are above a threshold *σₜₕᵣ* (or whose indicated variances are above a threshold ${σ}_{thr}^{2}$). For example, *Fₖ* may be selected to include only tuples associated with estimates in the *k*-th zone or tile and whose confidence levels regarding ground friction are such that σ*_{i,t}* ≤ *σₜₕᵣ*, or similar.

One can also envisage to obtain confidence levels/uncertainties also for the position estimates of the vehicles, e.g. standard errors *ρ_{i,t}* or e.g. variances ${ρ}_{i , t}^{2}$. If such data is available, the aggregation may in some examples be performed such that e.g. estimates whose confidence levels regarding position are below a predefined confidence level threshold are excluded, e.g. whose indicated standard errors are above a threshold *ρₜₕᵣ* (or whose indicated variances are above a threshold ${ρ}_{thr}^{2}$). For example, *Fₖ* may be selected to include only tuples associated with estimates in the k-th zone or tile whose confidence levels regarding position are such that *ρ_{i,t}* ≤ *ρₜₕᵣ*, or similar.

**FIG. 4A** schematically illustrates one or more examples of how an estimated ground friction map 400 of the geographical area 100 is divided into a plurality of grid tiles 410, wherein each tile is associated with a corresponding aggregate estimated ground friction *µ̅*_*k*. As envisaged herein, the size of each grid tile 410 may be selected based on prevailing preferences, taking into account e.g. an available amount of processing power, memory, and/or other needs. Preferably, each tile 410 is large enough such that a vehicle driving through the tile will provide a plurality of estimates of the ground friction in the tile. The grid tiles 410 may all be of similar or same size. For example, all grid tiles 410 may be equal in size. In other examples, grid tiles in one or more different rows may have different sizes, and/or grid tiles in one or more different columns may have different sizes. There may, for example, be a total of *K* grid tiles in the map 400, and each tile may be indexed using an increasing index "*k*" as described earlier herein, such that e.g. *k* can assume values in the interval [1, *K],* or similar. In other examples, each tile may be indexed using e.g. x- and y-indices, e.g. such that *k* becomes a tuple (*x, y*), or similar. Exactly how each tile is indexed is not important, as long as each tile can be distinguished somehow from all other tiles of the map 400. A tile as envisaged herein may for example be square or at least rectangular, and may be defined e.g. by coordinates of two opposite corners, or e.g. by one corner plus width and height of the tile, or e.g. by a center coordinate plus width and height of the tile, or by any other possible means.

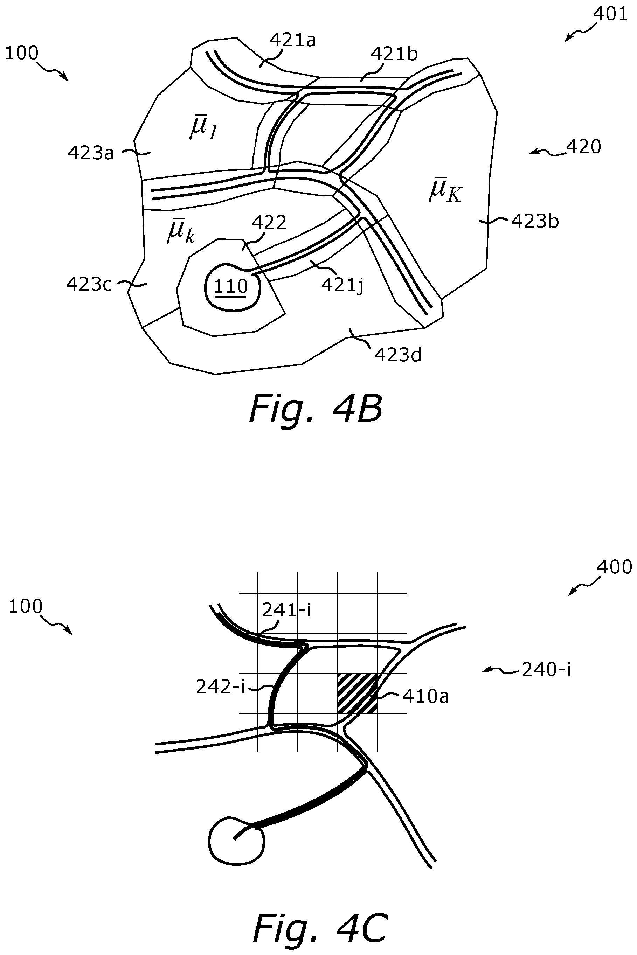

**FIG. 4B** schematically illustrates one or more examples of how an estimated ground friction map 401 of the geographical area 100 may instead be divided into a plurality of (irregularly shaped) zones 420. In some examples, such zones 420 may be defined such that they correspond e.g. to different sections of a road network within the area 100. Using the road network shown in FIG. 1 as one example, FIG. 4B shows how the zones 420 include zones 421a, 421b, ..., 421j corresponding to respective road sections 112a, 112b, ..., 112j of FIG. 1. By so doing, each of the zones 421-421j may thus correspond to a potential section of a route that is to be driven by a vehicle as part of a transport mission. Although here indicated as each covering a distance between two intersections, a zone may also be defined to e.g. cover a predefined length of a route, such as e.g. a few hundred meters, or similar.

Parts of the area 100 not including road sections may be assigned other zones, such as e.g. the zones 423a, 423b, 423c and 423d as indicated in FIG. 4B.

In some examples, areas of particular interest, such as the loading/unloading area 110 may be assigned its own zone, such as the zone 422 shown in FIG. 4B. This may be beneficial in that areas that are expected to be visited by many vehicles may be given particular attention. Other examples of such areas of particular interest may for example include (frequently visited) intersections such as 120e (in FIG. 1), parking lots, and similar. Areas of particular interest may for example also, or instead, include areas where it is known that e.g. ground friction is usually low, or e.g. areas where knowledge of ground friction is particularly important, such as in hilly/sloped regions, regions with usually slippery ground surface types, and similar. Generally, exactly how the geographical area 100 and map is partitioned/divided into zones is not important, but it is to be noted that the envisaged concept allows flexibility to adapt such zones in any way that makes transport mission planning easier and safer. A zone as envisaged herein may for example be described as a polygon, e.g. by a set of coordinates defining a boundary line of the polygon, or similar. For example, a polygon may be defined by a plurality of corner points, and the polygon may be assumed to lie within the area circumvented by a line passing through all such corner points. Polygons/zones as envisaged herein may all be convex, all be concave, or there may be a mix of both convex and concave polygons, all depending on the situation and most useful configuration of the map. Each zone 420 may e.g. be indexed by the index "*k*" as described herein, wherein *k* increases from e.g. "1" to a total number *K* of zones of the map 401, or similarly. Exactly how each zone is indexed is not important, as long as each zone may be distinguished from each of all other zones of the map 401.

**FIG. 4C** schematically illustrates how an estimated ground friction map (such as e.g. 400) as envisaged herein may be used as part of planning of one or more transport missions. With reference also to FIG. 2B, FIG. 4C illustrates how the route of the transport mission 240-i may be altered in response to determining that there is at least one tile 410a for which the aggregate estimated ground friction *µ̅ₖ* indicates that it is not suitable for the vehicle (that is to perform the mission 240-i) to enter the tile 410a. For example, this may be determined by the processing circuitry 210 in response to confirming that the value of *µ̅ₖ* is below the second friction threshold *µ*_{*k,thr*2}, or similar. As a consequence, the processing circuitry 210 reconfigures the route of the mission 240-i, such that the vehicle bypasses the tile 410a by taking a partly alternative route 242-i.

In other examples, instead of bypassing the tile 410a, the processing circuitry 210 may instead decide to allow the vehicle to pass through the tile 410a, but instead with a reduced speed. For example, the processing circuitry 210 may determine that the aggregate estimated ground friction *µ̅ₖ* is above the second friction threshold *µ*_{*k,thr*2} but below the first friction threshold *µ*_{*k,thr*1}, and reduce a desired speed limit of the vehicle in the tile 410a, e.g. to the first speed limit *v*_{*i,k,thr*1} associated with the first friction threshold *µ*_{*k,thr*1}, or similar. In other examples, interpolation in accordance with e.g. expression (1) may be used to adapt the desired speed limit in the tile 410a based on how far from the various friction thresholds the aggregate estimated ground friction *µ̅ₖ* is. A same reasoning as above may of course also be applied if zones (such as exemplified in FIG. 4B) are used instead of tiles.

In other examples, instead of, or in addition to, modifying the desired speed limit in a particular tile, the processing circuitry 210 may be configured to alter a desired speed profile in the tile. As envisaged herein, such a speed profile *v_{i,k}*(*l*) may provide a desired speed to be maintained by the vehicle as a function of how far (e.g. based on travelled distance *l*) the vehicle is along the planned mission and route. For example, a nominal speed profile may be adjusted upwards or downwards depending on whether the aggregate estimated ground friction is above or below a nominal threshold value, or similar. A speed profile may also be defined e.g. in terms of a set speed, distance thresholds to nearby vehicles (e.g. in front), a profile for how to perform emergency braking if required, and similar.

In other examples, the processing circuitry 210 may be configured to access e.g. geographical information system (GIS) data indicative of e.g. road surface types, road inclination/steepness/banking, road width, road curvature (such as how sharp road corners are), and similar, and use also such data in order to determine what desired speed limit or speed profile that is to be assigned to a vehicle in a particular zone or tile, based on the aggregate estimated ground friction *µ̅ₖ* for the particular zone or tile. For example, if the processing circuitry 210 knows (from such data) that there is a steep upward or downward slope, a sharp corner, a narrow road, and similar in the particular zone or tile, the processing circuitry 210 may pay particular attention to the aggregate *µ̅ₖ* when determining the desired speed limit or speed profile. For example, in such more critical areas, the thresholds for determining whether to allow the vehicle to enter the particular zone or tile at all may be reduced, while in less critical areas the thresholds may instead be increased, and similar.

In some examples, how to determine a desired speed limit, speed profile, and/or whether to allow a vehicle to enter a particular zone or tile may also be based on e.g. how much the vehicle is supposedly loaded (e.g. based on an assumed total weight *mᵢ*) of the vehicle when/if visiting the particular zone or tile, and/or of a particular type *Tᵢ* of the vehicle. For example, a heavily loaded vehicle may require higher aggregate *µ̅ₖ* values in order to enter the area, and similar, and heavily loaded vehicles may be allowed to only travel at lower speeds than less heavily loaded vehicles, and similar. The vehicle type *Tᵢ* may be taken into account by e.g. allowing vehicles with better nominal traction capabilities, such as e.g. tracked vehicles or vehicles with more wheels, vehicles equipped with winter tires, and similar, to travel at higher speeds and/or to enter areas with lower aggregate values *µ̅ₖ*, and vice versa, and similar. Generally, for particular zones or tiles wherein the aggregate value *µ̅ₖ* is deemed sufficiently high (e.g. is above some threshold value), the processing circuitry 210 may decide to impose no particular speed limit for a vehicle, and allow the vehicle to drive as fast as possible, or e.g. in accordance with a nominal speed profile for "good conditions", and similar.

As envisaged herein, it is also possible for the processing circuitry 210 to update (as part of e.g. an optional operation S340 of the method 300) already ongoing transport missions of one or more vehicles of the second set 132 based on updated aggregate values *µ̅ₖ*. For example, if the conditions in a particular zone or tile is deemed to now be particularly bad, e.g. if the value of *µ̅ₖ* drops below the second friction threshold *µ*_{*k,thr*2}, the processing circuitry 210 may decide to instruct (e.g. by wirelessly communicating with) one or more vehicles to stop, and await improving ground friction conditions. If possible, the processing circuitry 210 may decide to reroute the missions of the one or more vehicles such that they take another route outside of the particular zone or tile, as exemplified already in FIG. 4C. Phrased differently, the transport missions need not be static once initially planned, and the processing circuitry 210 may receive updated estimates of ground friction from vehicles driving in the geographical area 100, update the corresponding aggregate values *µ̅ₖ* for a zone or tile once new estimates arrive, and further update one or more already initially planned transport missions based thereon.

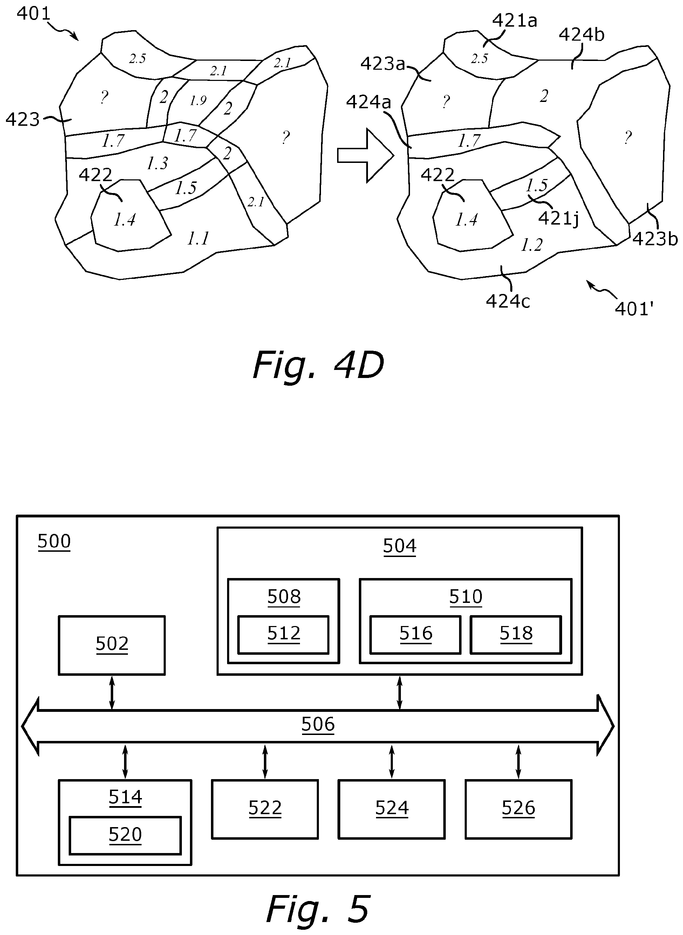

**FIG. 4D** schematically illustrates another envisaged example of such dynamic updating, wherein the processing circuitry 210 is further configured to (as part of e.g. the optional operation S340) update the configuration of zones of the map 401 dynamically, based on the generated values of *µ̅ₖ* in the respective zones and/or based on the received estimates *µ_{i,t}*. For example, as indicated by the numbers in each zone to the left in FIG. 4D, each zone is associated with an aggregate value *µ̅ₖ* (here illustrated using some arbitrarily scaled values). As also possible, there may be no such aggregate values for one or more zones, as shown by the question marks. This may for example be to no vehicle having previously driven in such a particular zone (or tile), or e.g. that the estimates once received from vehicles in such zones or tiles are deemed to be too old.

For zones that have sufficiently similar aggregate values *µ̅ₖ*, the zones may for example be combined into a same zone in order to reduce the overall number of zones. As envisaged herein, "sufficiently similar" may for example mean that the aggregate values are the same, or that the aggregate values lie within a same ground friction interval, or e.g. that the aggregate values do not differ from each other with more than some predefined amount, and similar. In the example of FIG. 4D, it has been assumed that any two zones whose aggregate values *µ̅ₖ* do not differ with more than 0.2 are to be redefined as a same zone. In some examples, a further requirement may include that for two zones to be combined, the two zones must be neighboring zones. In other examples, no such requirement is used, and zones may be combined based on their aggregate values *µ̅ₖ* even if they do not neighbor each other (i.e. share at least one common border). Combining e.g. all zones having a same aggregate value into a single zone may for example be beneficial in that edge-cases, e.g. zones wherein the estimated (aggregate) ground friction is e.g. particularly bad (or good) may be easily identified as a single zone, and in that special care may be taken for vehicles about to enter such a zone.

As shown to the right in FIG. 4D, in this particular example, such dynamic update may result in that zones with aggregate values of 2 ± 0.1 are combined into a new zone 424b, that zones with aggregate values of 1.7 ± 0.1 are combined into a new zone 424a, that zones with aggregate values of 1.2 ± 0.1 are combined into a new zone 424c, and similar. Each one of the zones having aggregate values of e.g. 1.5 and 2.5 is for example not combined with any other zone, and remains as zone 421a and 421j, respectively, which applies also for the zones 423a and 423b for which no aggregate value was (in this particular example) available. How to combine zones into new zones may of course be performed in many possible ways, and FIG. 4D mainly serves to illustrates one or a few possible such examples.

FIG. 4D also serves to illustrate that in some examples, it is envisaged that some zones may be prevented from ever being combined with other zones, such as for example zones associated with areas of particular interest, such as the zone 422 including the loading/unloading area 110, and similar. This may be beneficial in that such zones thus remain easily identifiable, and are prevented from growing.

In some examples, it is envisaged that how much reported estimates of ground friction from vehicles in a same zone differs from each other may be taken into account, as a way of determining if a particular zone is instead to be split into two or more zones. For example, a zone may once have been formed by previous zones having similar aggregate values, but it is not guaranteed that the aggregate values of the previous zones will remain sufficiently similar over time, as e.g. weather and other ambient conditions may change. As envisaged herein, the processing circuitry 210 may for example be configured to split such a zone in accordance with a predefined methodology (such that by dividing the zone in half, e.g. in two halves each having similar or same areas, or by any other possible means). In other examples, the processing circuitry 210 may explicitly study the reported estimates, and attempt to split the zone into two or more new zones each encompassing reported estimates that are deemed sufficiently similar. By so doing, the division into zones of the map 401 may be dynamically updated such that new zones may both form by combining two or more previous zones, and also by splitting previous zones into two or more new zones. Generally, the processing circuitry 210 may for example be envisaged to keep track of the incoming estimates *µ_{i,k}* from the vehicles, and to divide the map (such as 401) into zones that encompasses same or sufficiently similar estimates of ground friction. For example, the processing circuitry 210 may use any suitable map partitioning/clustering algorithm for such a purpose, including e.g. exploratory and/or statistical data analysis. For example, as one of many envisaged possible solutions, k-means clustering separating the received estimates *µ_{i,t}* into Voronoi cells may be used to generate the different zones of the map 401. Other examples include e.g. the use of Gaussian mixture models or other model-based clustering, the use of heat maps and clustering based on same or similar colors, and similar. Various techniques based on machine learning, artificial neural networks, and similar may of course also be used to segmentate the map into various zones.

As another example, the processing circuitry 210 may be configured to use both tiles and zones as part of forming the map. For example, the processing circuitry 210 may start with tiles, and combine tiles having same or sufficiently similar aggregate values *µ̅ₖ* to form also one or more zones, and similar. Using tiles as a basis may for example be useful to dynamically update the zones, as new zones may be formed by combining tiles currently having same or sufficiently similar aggregate values, and/or by splitting previous zones into two or more new zones once the aggregate values of the underlying tiles start to deviate too much, e.g. when a standard error or variance of the aggregate values of the tiles exceeds a corresponding threshold, and similar.

FIG. 4D may also be used to illustrate another example, in which it is envisaged that for zones for which no aggregate value *µ̅ₖ* is currently available, a (synthetic) value may be formed by e.g. considering one or more neighboring zones for which aggregate values *µ̅ₖ* are available. For example, for a zone not currently having an aggregate value, an aggregate value can be formed by e.g. averaging over the aggregate values of two or more neighboring zones, or e.g. by assigning a same aggregate value as at least one neighboring zone. Examples may also include to also consider e.g. next-nearest neighboring zones, and similar. As one example, the zone 423 to the left in FIG. 4D may be assigned a value based on the neighboring zones indicated as having values 2.5, 2 and 1.7, wherein the assigned value to the zone 423 may for example be a mean value (e.g. ≈ 2.1), or similar. Assigning such "synthetic" aggregate values to a zone may for example be particularly useful if the aggregations are formed using maximum timeout values as described earlier herein, wherein received estimates from the vehicles are not considered if they are deemed too old, in which case a zone may stop having an assigned aggregate value if there are no vehicles that have driven in the zone sufficiently recently. This allows e.g. a vehicle to enter such a zone anyway, based on the assumption that neighboring zones are more likely to have same or similar ground friction conditions than zones further away, which may or may not always be true.

As also envisaged herein, in some examples, the processing circuitry 210 may be further configured to (as part of e.g. an optional operation S350 of the method 300) send data indicative of at least one of the ground friction map *M* and the aggregate estimated ground friction *µ̅ₖ* for one or more zones or tiles of the geographical area 100 to one or more vehicles, such as to one or more vehicles of the second set 132. This may have the benefit that such one or more vehicles may then use the aggregate ground friction estimates as part of their own motion control/planning, allowing them to be more proactive and not only rely on their own ground friction estimates. For example, a vehicle may then already know about the estimated ground friction in an upcoming section of e.g. a road, i.e. before the vehicle arrives at the section and is capable of performing such an estimate on its own. More in particular, receiving such data from the processing circuitry 210 may be beneficial for vehicles that have no own capability to perform ground friction estimation. Vehicles may for example use the estimated (aggregate) ground friction received from the processing circuitry 210 to adjust a distance to a tailed vehicle as part of an adaptive cruise control functionality, to enable the vehicle to stop safely based on the estimated ground friction, and similar. Other examples of how a vehicle may use such information received from the processing circuitry 210 includes the vehicle deciding whether to use engine braking, e.g. to avoid using engine braking when in an area for which the aggregate ground friction is low, to avoid e.g. locking of one or more drive shafts/axles of the vehicle. A vehicle may also use the aggregate ground friction information to plan when to start braking as part of e.g. enforcing a corner, as part of emergency braking, a pull-to-curb maneuver, and similar. In general, it is envisaged that the motion planning and control of vehicles may be improved by being allowed to receive the aggregate ground friction (estimation) data from the processing circuitry 210. The processing circuitry 210 may communicate with the vehicles using e.g. the same one or more wireless links used to receive the estimates from the vehicles, or by any other same or other mean for e.g. wireless communication that are available. As also mentioned earlier herein, vehicles may communicate also with each other, to e.g. form a mesh grid of vehicles that can extend the overall communication range, which may be important if e.g. the terrain in the geographical area is such that the processing circuitry 210 and computer system 200 is otherwise not capable of reaching all vehicles in all locations.

**FIG. 5** is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of all of the above, it has herein been presented a solution that enables for easier and safer planning of transport missions for transport vehicles (or pieces of heavy machinery). By maintaining a map (including tiles and/or zones) of a geographical area, and by calculating an aggregate estimated ground friction value for each such tile or zone based on estimates of ground friction received from vehicles driving (or having driven) in the geographical area, an up-to-date picture of the prevailing ground friction conditions in the area as a whole may be obtained, and used as part of the transport mission planning. Thus, by moving from a conventional concept where each vehicle is responsible for its own planning regarding ground friction, to a higher-level concept wherein such information is shared for all vehicles as part of the mission planning, the mission planning can be made more accurate, and result in improved vehicle performance, reduced costs, and in particular improved safety, as the planning of routes for the vehicles are made more aware of the prevailing ground friction conditions. As envisaged herein, obtaining a higher-level picture of the friction conditions of a whole geographical area may for example increase safety and e.g. vehicle stability, in particular in lower-friction conditions. In addition, in particular in higher-friction conditions, the envisaged solution may also provide increased productivity of the overall vehicle fleet, as the higher-level overview of friction conditions in the geographical area may allow to increase e.g. speed of all vehicles while still maintaining safety, if the estimates so indicate. This in contrast to contemporary solutions, wherein information is not shared among vehicles, and where conservative, often lower-than-needed estimates are instead used to guarantee sufficient safety, something that may reduce overall productivity.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:
Example 1: A computer system including processing circuitry configured to: gather, for each vehicle of a first set of one or more of vehicles driven in a geographical area, data indicative of at least vehicle position and estimated ground friction at the vehicle position; generate or update an estimated ground friction map of the geographical area, wherein the map defines a division of the geographical area into a plurality of geographical zones or grid tiles, and wherein an aggregate estimated ground friction for a zone or tile is found based on aggregation of the estimated ground friction for one or more vehicle positions belonging to the zone or tile, and use the estimated ground friction map as part of planning of one or more transport missions in the geographical area for each vehicle of a second set of one or more vehicles, including to use the estimated ground friction map to determine at least one of i) a desired speed limit or speed profile for the vehicle within a particular zone or tile and ii) whether the aggregate estimated ground friction in the particular zone or tile is sufficiently large to allow the vehicle to drive through the particular zone or tile.
Example 2: The computer system of example 1, wherein the desired speed limit of the vehicle in the particular zone or tile is reduced if the aggregate estimated ground friction for the particular zone or tile is below a first friction threshold .
Example 3: The computer system of example 1 or 2, wherein the vehicle is not allowed to drive through the particular zone or tile if the aggregate estimated ground friction for the particular zone or tile is below a second friction threshold.
Example 4: The computer system of example 2 and 3, wherein the first friction threshold is higher than the second friction threshold, and wherein the desired speed limit is determined by interpolating between a first speed limit associated with the first friction threshold and a second speed limit associated with the second friction threshold, wherein the first speed limit is higher than the second speed limit.
Example 5: The computer system of any one of the preceding examples, wherein said aggregation includes to give more weight to more recently estimated ground friction values than others.
Example 6: The computer system of example 5, wherein said aggregation includes to form a time-rolling average of a predefined number of most recent estimated ground friction values.
Example 7: The computer system of example 5 or 6, wherein said aggregation includes to discard estimated ground friction values whose age is above a predefined time threshold.
Example 8: The computer system of any one of the preceding examples, wherein the gathered data is further indicative also of a confidence level of each estimated ground friction and/or vehicle position, and wherein said aggregation includes to give more weight to more confident values than to less confident values.
Example 9: The computer system of example 8, wherein said aggregation includes to discard estimated ground friction values whose confidence level is below a predefined confidence threshold.
Example 10: The computer system of any one of the preceding examples, wherein at least some of the geographical zones correspond to different sections of a route to be driven by the vehicle as part of the one or more transport missions.
Example 11: The computer system of any one of the preceding examples, wherein at least one of the geographical zones corresponds to a loading and/or unloading zone.
Example 12: The computer system of any one of the preceding examples, wherein, for a geographical zone or tile for which no estimated ground friction is provided and/or for which some or all of the estimated ground friction are deemed too old, the aggregate estimated ground friction is determined based on aggregate estimated ground friction for one or more neighboring zones or tiles.
Example 13: The computer system of any one of the preceding examples, wherein the geographical zones or tiles are dynamically redefined over time, such that zones and/or tiles for which the aggregate estimated ground friction values are the same, or at least belong to a same ground friction interval, are considered to form a same zone or tile for the planning of the one or more transport missions.
Example 14: The computer system of any one of the preceding examples, wherein the desired speed limit or speed profile for the vehicle within the particular zone or tile, and/or the decision whether to allow the vehicle to drive through the particular zone or tile, depends on at least one of a weight of the vehicle and a type of the vehicle.
Example 15: The computer system of any one of the preceding examples, wherein the desired speed profile for the vehicle includes set speed, distance thresholds to nearby vehicles and an emergency brake profile.
Example 16: The computer system of any one of the preceding examples, wherein the processing circuitry is further configured to send, via one or wireless links, data indicative of at least one of the ground friction map and the aggregate estimated ground friction for one or more zones or tiles of the geographical area to one or more vehicles of the second set of one or more vehicles.
Example 17: A fleet of transport vehicles, including: a plurality of vehicles configured to transport goods and/or persons as part of one or more transport missions; the computer system of any one of examples 1 to 16, wherein at least one of the vehicles is configured to estimate its vehicle position and estimate ground friction at said position, and to provide data indicative of its estimated ground friction and vehicle position to the computer system, and wherein the computer system is configured to gather said data from the at least one vehicle and to plan the one or more transport missions.
Example 18: A computer-implemented method, including: gathering, by processing circuitry of a computer system and for each vehicle of a first set of one or more of vehicles driven in a geographical area, data indicative of at least vehicle position and estimated ground friction at the vehicle position; generating or updating, by the processing circuitry, an estimated ground friction map of the geographical area, wherein the map defines a division of the geographical area into a plurality of geographical zones or grid tiles, and wherein an aggregate estimated ground friction for a zone or tile is found based on aggregation of the estimated ground friction for one or more vehicle positions belonging to the zone or tile, and using, by the processing circuitry, the estimated ground friction map as part of planning of one or more transport missions in the geographical area for each vehicle of a second set of one or more vehicles, including using the estimated ground friction map to determine at least one of i) a desired speed limit or speed profile for the vehicle within a particular zone or tile and ii) whether the aggregate estimated ground friction in the particular zone or tile is sufficiently large to allow the vehicle to drive through the particular zone or tile.
Example 19: A computer program product including program code for performing, when executed by the processing circuitry, the method of example 18.
Example 20: A non-transitory computer-readable storage medium including instructions which, when executed by the processing circuitry, cause the processing circuitry to perform the method of example 18.

## Claims

1. A computer system (200, 500) comprising processing circuitry (210, 502) configured to:
- gather, for each vehicle (140-i) of a first set (130) of one or more of vehicles (140) driven in a geographical area (100), data indicative of at least vehicle position (*p̅_{i,t}*) and estimated ground friction (*µ_{i,t}*) at the vehicle position;
- generate or update an estimated ground friction map (400, 401) of the geographical area, wherein the map defines a division of the geographical area into a plurality of geographical zones (420) or grid tiles (410), and wherein an aggregate estimated ground friction (*µ̅ₖ*) for a zone or tile is found based on aggregation of the estimated ground friction for one or more vehicle positions belonging to the zone or tile,
and
- use the estimated ground friction map as part of planning of one or more transport missions (240) in the geographical area for each vehicle of a second set (132) of one or more vehicles (140), comprising to use the estimated ground friction map to determine at least one of i) a desired speed limit (*v_{i,k,lim}*) or speed profile (*u_{i,k}*(*l*)) for the vehicle within a particular zone or tile and ii) whether the aggregate estimated ground friction in the particular zone or tile is sufficiently large to allow the vehicle to drive through the particular zone or tile.

2. The computer system of claim 1, wherein the desired speed limit of the vehicle in the particular zone or tile is reduced if the aggregate estimated ground friction for the particular zone or tile is below a first friction threshold (*µ*_{*k,thr*1}), and/or wherein the vehicle is not allowed to drive through the particular zone or tile if the aggregate estimated ground friction for the particular zone or tile is below a second friction threshold (*µ*_{*k,thr*2}).

3. The computer system of claim 2, wherein the first friction threshold is higher than the second friction threshold, and wherein the desired speed limit is determined by interpolating between a first speed limit associated with the first friction threshold and a second speed limit associated with the second friction threshold, wherein the first speed limit is higher than the second speed limit.

4. The computer system of any one of the preceding claims, wherein said aggregation includes to give more weight to more recently estimated ground friction values than others.

5. The computer system of claim 5, wherein said aggregation comprises to form a time-rolling average of a predefined number of most recent estimated ground friction values, and/or wherein said aggregation comprises to discard estimated ground friction values whose age is above a predefined time threshold.

6. The computer system of any one of the preceding claims, wherein the gathered data is further indicative also of a confidence level of each estimated ground friction (*σ_{i,t}*) and/or vehicle position (*ρ_{i,t}*), and wherein said aggregation includes to give more weight to more confident values than to less confident values and/or to discard estimated ground friction values whose confidence level is below a predefined confidence threshold.

7. The computer system of any one of the preceding claims, wherein at least some of the geographical zones correspond to different sections (112a-112j) of a route (421-i) to be driven by the vehicle as part of the one or more transport missions.

8. The computer system of any one of the preceding claims, wherein, for a geographical zone or tile for which no estimated ground friction is provided and/or for which some or all of the estimated ground friction are deemed too old, the aggregate estimated ground friction is determined based on aggregate estimated ground friction for one or more neighboring zones or tiles.

9. The computer system of any one of the preceding claims, wherein the geographical zones or tiles are dynamically redefined over time, such that zones and/or tiles for which the aggregate estimated ground friction values are the same, or at least belong to a same ground friction interval, are considered to form a same zone or tile for the planning of the one or more transport missions.

10. The computer system of any one of the preceding claims, wherein the desired speed limit or speed profile for the vehicle within the particular zone or tile, and/or the decision whether to allow the vehicle to drive through the particular zone or tile, depends on at least one of a weight (*mᵢ*) of the vehicle and a type (*Tᵢ*) of the vehicle, and/or wherein the desired speed profile for the vehicle comprises set speed, distance thresholds to nearby vehicles and an emergency brake profile.

11. The computer system of any one of the preceding claims, wherein the processing circuitry is further configured to send, via one or wireless links (220-i), data indicative of at least one of the ground friction map and the aggregate estimated ground friction for one or more zones or tiles of the geographical area to one or more vehicles of the second set of one or more vehicles.

12. A fleet (250) of transport vehicles, comprising:
- a plurality of vehicles (140) configured to transport goods and/or persons as part of one or more transport missions (240);
- the computer system (200) of any one of claims 1 to 11,
wherein at least one of the vehicles is configured to estimate its vehicle position and estimate ground friction at said position, and to provide data indicative of its estimated ground friction and vehicle position to the computer system, and
wherein the computer system is configured to gather said data from the at least one vehicle and to plan the one or more transport missions.

13. A computer-implemented method (300), comprising:
- gathering (S310), by processing circuitry (210, 502) of a computer system (200, 500) and for each vehicle of a first set of one or more of vehicles driven in a geographical area, data indicative of at least vehicle position and estimated ground friction at the vehicle position;
- generating or updating (S320), by the processing circuitry, an estimated ground friction map of the geographical area, wherein the map defines a division of the geographical area into a plurality of geographical zones or grid tiles, and wherein an aggregate estimated ground friction for a zone or tile is found based on aggregation of the estimated ground friction for one or more vehicle positions belonging to the zone or tile,
and
- using (S330), by the processing circuitry, the estimated ground friction map as part of planning of one or more transport missions in the geographical area for each vehicle of a second set of one or more vehicles, comprising using the estimated ground friction map to determine at least one of i) a desired speed limit or speed profile for the vehicle within a particular zone or tile and ii) whether the aggregate estimated ground friction in the particular zone or tile is sufficiently large to allow the vehicle to drive through the particular zone or tile.

14. A computer program product comprising program code for performing, when executed by the processing circuitry (210, 502), the method (300) of claim 13.

15. A non-transitory computer-readable storage medium comprising instructions which, when executed by the processing circuitry (210, 502), cause the processing circuitry to perform the method (300) of claim 13.
